# EUROPÄISCHE PATENTSCHRIFT

(11) **EP 1 476 379 B1**
(45) Veröffentlichungstag und Bekanntmachung des Hinweises auf die Patenterteilung: **09.11.2005**
(21) Anmeldenummer: 03706455.7
(22) Anmeldetag: 07.02.2003
(51) Int. Cl.: B65G 47/53, B65G 23/34

(54) **SORTIERMASCHINE**
SORTING MACHINE
TRIEUSE

(30) Priorität: 11.02.2002 DE 10205606
(43) Veröffentlichungstag der Anmeldung: 17.11.2004
(73) Patentinhaber: Trauten, Inge, 55286 Wörrstadt (DE)
(72) Erfinder: TRAUTEN, Karl, 55286 Wörrstadt (DE)
(86) Internationale Anmeldenummer: PCT/EP2003/001231
(87) Internationale Veröffentlichungsnummer: WO 2003/068641

(56) Entgegenhaltungen:
- WO-A-95/05330

## Beschreibung

Die Erfindung betrifft eine Sortiermaschine nach dem Oberbegriff des Patentanspruchs 1.

Eine gattungsgemäße Sortiermaschine ist z.B. aus der EP 0750582 bekannt. Bei dieser Vorrichtung sind die Querförderer über die Förderebene der Längsförderbahnen anhebbar bzw. absenkbar. Die Übergabe der Waren von den Längsförderbahnen auf die Querförderer erfolgt bei diesem System in abgesenktem Zustand der Querförderer. Die Querförderbahnen sind in Längsrichtung der Längsförderbahnen verfahrbar und bewegen die Waren von einer Position vor der einen Längsförderbahn auf eine Position vor der anderen Längsförderbahn. Von dort aus können sie in angehobenem Zustand zurück auf die entsprechende Längsförderbahn übergeben werden, so dass die Waren nach Art eines Ringtausches transportiert bzw. aussortiert werden können.

Bei der dem Stand der Technik entsprechenden Sortiermaschine sind eine größere Anzahl von Antriebsmotoren zum Antrieb der Fördereinrichtungen und zum Anheben und Absenken der Querförderer erforderlich, so dass die Anlagen vergleichsweise teuer sind. Darüber hinaus ist ein nicht unerheblicher Steuerungsaufwand erforderlich, um einen reibungslosen Transport bzw. ein Aussortieren der Waren zu gewährleisten. Auch eine Anordnung der einzelnen Förderbahnen übereinander und nebeneinander ist auf Grund der Vielzahl von Antriebsmotoren problematisch.

Der Erfindung liegt daher die Aufgabe zugrunde, eine gattungsgemäße Sortiermaschine zu schaffen, die preiswerter herzustellen ist und bei der eine platzsparende Bauweise in mehreren Förderebenen übereinander und nebeneinander erleichtert ist.

Diese Aufgabe wird erfindungsgemäß durch den kennzeichnenden Teil des Patentanspruchs 1 gelöst.

Durch die Mithilfe eines in Längsrichtung der Längsförderbahnen verfahrbaren Mitnehmers können die Waren, Behältnisse oder Normbehälter mit oder ohne Rollräder von den Längsförderbahnen auf die Querförderer übergeben werden, ohne diese wie beim Stand der Technik abzusenken. Auch die Übergabe der Waren auf eine Entnahmestation ist dadurch auf der gleichen Förderebene problemlos möglich.

Der Mitnehmer, der beim normalen Ringtausch der Waren auf den Querförderer mit dessen Hin- und Herbewegung gekoppelt ist, kann mit Hilfe einer entsprechenden Steuerungseinrichtung bei Bedarf jedoch relativ zu den Querförderem in Längsrichtung der Längsförderbahnen bewegt werden, so dass er, z.B. mit Hilfe von bewegbaren Anschlägen, die Waren oder Behältnisse vom Querförderer auf eine Puffer- oder Entnahmestation fördern kann. Die Entnahmestation weist dabei vorzugsweise eine Fördereinrichtung wie ein endlos umlaufendes Band auf, mit dessen Hilfe die Waren quer zur Längsrichtung der Längsförderbahnen bewegt werden können und so z.B. auf benachbarte Sortiermaschinen übergeben werden oder aus dem System entnommen werden können.

Bei dem erfindungsgemäßen System ist es dabei von besonderem Vorteil, dass der Antrieb der Fördereinrichtungen, der Längsförderbahnen, z.B. umlaufende Bänder oder Ketten, der Antrieb der Querförderer, der Antrieb der Fördereinrichtungen der Querförderer, der Antrieb des Mitnehmers und sogar der Antrieb der Fördereinrichtung der Entnahmestation mittels eines gemeinsamen, vorzugsweise als Kurbelgetriebe ausgebildeten Antriebsaggregates erfolgen kann. Hierzu werden z.B. umlaufende Zahnriemen verwendet, die gegebenenfalls über Umlenk- oder Winkelgetriebe mit den entsprechenden Antriebsachsen gekoppelt sind. Gegenläufige Bewegungen der Antriebsachsen bzw. Fördereinrichtungen können dabei bei Bedarf über ansteuerbare Andrückrollen erzeugt werden, durch deren Bewegungen die Zahnriemen in wechselndem Eingriff auf gegenüberliegenden Seiten der Antriebsritzel gebracht werden können. Zu den Einzelheiten des Antriebssystems wird auf die Figurenbeschreibung verwiesen.

Aufgrund der Bewegungscharakteristik der Querförderer bzw. deren Fördereinrichtungen, die von dem Kurbelgetriebe oszillierend bewegt werden, ergibt sich eine halbkreisförmige Bewegungsbahn der Waren mit konstanter Bewegungsgeschwindigkeit. Die Geschwindigkeit des Querförderers bei seiner Hin- und Herbewegung in Längsrichtung der Längsförderbahnen und die dazu um 90° versetzte, oszillierende Querbewegung der Fördereinrichtungen zwischen den jeweiligen Endpunkten verläuft dabei sinusförmig.

Wie mit Hilfe einer Versuchsanlage nachgewiesen werden konnte, ist es aufgrund der konstanten Bahngeschwindigkeit der Waren z.B. möglich, Flüssigkeit enthaltende offene Behälter ohne Flüssigkeitsverlust zu transportieren.

Bei einer bevorzugten Ausführungsform des Mitnehmers besteht dieser aus einem Rahmengestell, das sich in Längsrichtung der Längsförderbahnen erstreckt und aus vier Mitnehmerrahmen besteht, an deren Querstreben je zwei ansteuerbare, höhenveränderliche Anschläge zueinander beabstandet angeordnet sind. Dabei wirken die jeweils in einer Reihe fluchtend hintereinander sitzenden Anschläge der einzelnen Querstreben mit den Waren oder Behältnissen einer Längsförderbahn bzw. mit den Waren oder Behältnissen in der entsprechenden Position auf den Querförderern zusammen. In der Betätigungsstellung der Anschläge können diese die Waren hintergreifen und führen, wenn eine entsprechende Bewegung des Mitnehmers in Längsrichtung der Längsförderbahnen erfolgt. Die erwähnte Relativbewegung des Mitnehmers kann z.B. durch einen Teleskop-Arm oder flaschenzugartigen Antrieb erfolgen, der mit dem Kurbelgetriebe gekoppelt ist und bei Bedarf betätigt wird.

Die Steuerung des Mitnehmers und die Steuerung der Anschläge erfolgt vorzugsweise mittels eines separaten Mikroprozessors, während für die Entnahme oder Übergabe der Waren auf eine benachbarte Sortiermaschine ein Leitrechner sorgt. Hierzu können z.B. die bekannten Transpondersysteme eingesetzt werden.

Der Leitrechner übemimmt in ähnlicher Weise auch die Warenerfassung bei der Eingabe von Waren in das Sortiersystem.

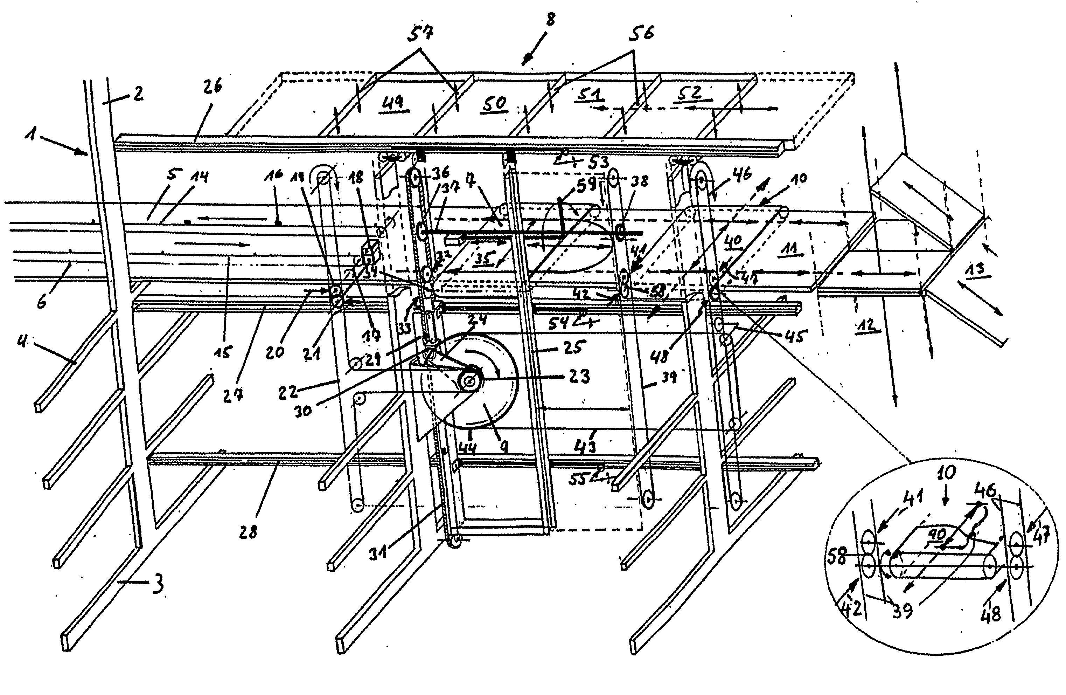

Die Erfindung wird im nachfolgenden anhand der Zeichnung beispielsweise im einzelnen beschrieben.

Die Zeichnungsfigur zeigt in perspektivischer Ansicht ein Kragarmgestell 1, bei dem sich beiderseits zu einem Mittelständer 2 mit einem Fuß 3 Kragarme 4 erstrecken.

Mehrere hintereinander liegende Kragarme 4 bilden jeweils eine Ebene zum Tragen einer erfindungsgemäßen Sortiermaschine, die im wesentlichen aus zwei gegenläufig fördernden Längsförderbahnen 5, 6, einem in Längsrichtung der Längsförderbahnen 5, 6 hin-und her- bewegbaren Querförderer 7, einem in Längsrichtung der Längsförderbahnen 5, 6, hin- und her- bewegbaren Mitnehmer 8, einem Kurbelgetriebe 9, einer Entnahmestation 10, einem Pufferplatz 11, einer Tandemhubeinrichtung 12 und einer Rutsche 13 zur Warenablage bzw. Warenentnahme.

Die einzelnen Kragarmebenen sind jeweils mit entsprechenden, aus Gründen der Übersichtlichkeit nicht dargestellten Sortiermaschinen bestückt. Aus dem gleichen Grund sind auch die zu sortierenden bzw. transportierenden Waren nicht angezeigt. Am anderen, ebenfalls nicht dargestellten Ende der Längsförderbahnen 5, 6 befinden sich in spiegelsymmetrischer Anordnung die entsprechenden Einrichtungen 7 bis 13.

Die Längsförderbahnen 5, 6 im dargestellten Ausführungsbeispiel weisen als Fördereinrichtung jeweils eine endlos umlaufende Kette 14, 15 mit Mitnehmernoppen 16 auf. Die Ketten 14, 15 werden durch eine Achse 17 mit einem Umlenkgetriebe 18 angetrieben, wobei das Umlenkgetriebe 18 auch zum Entkoppeln der benachbarten Achsenteile verwendet werden kann. Durch das Umlenkgetriebe 18 bewegen sich die Ketten 14, 15 normalerweise gegenläufig. Der Antrieb erfolgt mit Hilfe eines Ritzels 19, das mit Hilfe von bewegbaren Andrückrollen (symbolisiert durch die Pfeile 20, 21) wahlweise beidseitig mit einem Zahnriemen 22 in Eingriff gebracht werden kann. Auf diese Weise kann die Laufrichtung der Ketten 14, 15 eingestellt werden.

Der Zahnriemen 22 wird von einem Zahnkranz 23 des Kurbelgetriebes 9 angetrieben. Das Kurbelgetriebe 9 weist einen Kurbelarm 24 auf, der an seinem Ende mit einem Gestell 25 verbunden ist. Dieses Gestell 25 ist an horizontalen Linearführungen 26, 27 und 28 verschiebbar geführt und bewegt sich bei drehendem Kurbelgetriebe in Längsrichtung der Längsförderbahnen 5, 6 hin und her. Der Kurbelarm 24 ist an seinem Ende über einen an einer vertikalen Linearführung 29 laufenden Schlitten 30 weiterhin mit einem vertikal angeordnetem, umlaufenden Zahnriemen 31 verbunden, der mit dem Gestell 25 hin und her bewegt wird.

Der Zahnriemen 31 läuft durch die Drehbewegung des Kurbelarmes 24 oszillierend auf und ab und kann über die Andrückrollen 32, 33 beidseitig mit dem Ritzel 34 in Eingriff gebracht werden, das zum Antrieb der aus einem umlaufenden Band 35 bestehenden Fördereinrichtung des Querförderers 7, der mit dem Gestell 25 hin und her läuft, dient. Durch die wechselnde Bewegungsrichtung des Zahnriemens 31 wechselt entsprechend die Bewegungsrichtung des Bandes 35, so dass auf dem Querförderer 7 stehende Waren von einer Position vor der Längsförderbahn 5 auf eine Position vor der Längsförderbahn 6, durch einen steuerbaren drehbaren Anschlag 59 am Ende des Bewegungsablaufs gehalten oder umgekehrt bewegt werden.

Der Zahnriemen 31 treibt über das Ritzel 36 eine Welle 37 an, die in einem Antriebsritzel 38 verschiebbar geführt ist. Das Ritzel 38 treibt einen weiteren umlaufenden Zahnriemen 39 an, der seinerseits für eine oszillierende Bewegung eines Bandes 40 der Entnahmestation 10 sorgt. Die Laufrichtung des Bandes 40 ist wiederum mit Hilfe der bewegbaren Andrückrollen 41, 42 einstellbar.

Ein Zahnriemen 43, der über einen äußeren Zahnkranz 44 des Kurbelgetriebes 9 läuft, ist über ein Winkelgetriebe 45 mit einem weiteren umlaufenden Zahnriemen 46 verbunden, der über weitere Andrückrollen 47, 48 das Band 40 in einer gewünschten Laufrichtung antreiben kann, wenn sich das Ritzel 58 außer Eingriff mit dem Zahnriemen 39 befindet. Durch den Zahnriemen 46 wird eine Übergabe der Waren z.B. auf eine benachbarte Sortiermaschine ermöglicht, während der Zahnriemen 39 lediglich eine Bewegung der Waren von einer Seite der Entnahmestation 10 auf die andere bewirkt.

### Beispiel:

Bei der gewählten maximalen oszillierenden Transportbewegung des Bandes 40, gestartet duch die Andrückrolle 41, kann durch schnelle Umschaltung der Andruckrolle 47 diese Geschwindigkeit beibehalten oder durch umgekehrte Schaltung eine sanfte Positionierung in einer benachbarten Sortierzelle ermöglicht, der Weitertransport der Waren gesteuert oder das Band zum Stillstand gebracht werden.

Der aus den Mitnehmerrahmen 49, 50, 51, 52 bestehende Mitnehmer 8 ist mit dem Gestell 25 in Längsrichtung der Längsförderbahnen 5, 6 hin und her bewegbar, jedoch mittels einer nicht im einzelnen dargestellten ansteuerbaren Antriebsvorrichtung wie eines Teleskop-Armes oder eines Flaschenzuges relativ zu dem Gestell 25 bzw. dem Querförderer 7 bewegbar. Der Mitnehmer ist in den Linearführungen 26, 27, 28 geführt und in deren Längsrichtung verschiebbar.

Die Auslöseeinrichtung zur Relativverschiebung des Mitnehmers 8 ist durch den Pfeil 53 symbolisiert, während die Pfeile 54 und 55 die Auslöseeinrichtungen für die nicht gezeichneten Mitnehmer der darunter liegenden Sortiermaschinen kennzeichnen.

Die höhenverstellbaren und einzeln ansteuerbaren Anschläge an den Querstreben 56 der Mitnehmerrahmen 49 bis 52 sind durch 10 Doppelpfeile 57 symbolisiert. Die Anschläge können hydraulisch, pneumatisch oder elektromagnetisch betätigt werden.

Hinter der stationären Entnahmestation 10 ist der Pufferplatz 11 mit zwei benachbarten Stellplätzen für Waren oder Behältnisse vorgesehen. Von dort können die Waren durch eine Relativbewegung des Mitnehmers 8 in die Tandemhubeinrichtung 12 oder auf die Rutsche 13 gefördert werden.

### Bezugszeichenliste

- 1: Kragarmgestell
- 2: Mittelständer
- 3: Fuß
- 4: Kragarm
- 5: Längsförderbahn
- 6: Längsförderbahn
- 7: Querförderer
- 8: Mitnehmer
- 9: Kurbelgetriebe
- 10: Entnahmestation
- 11: Pufferplatz
- 12: Tandemhubeinrichtung
- 13: Rutsche
- 14: Kette
- 15: Kette
- 16: Mitnehmernoppe
- 17: Achse
- 18: Umlenkgetriebe
- 19: Ritzel
- 20: Andrückrolle
- 21: Andrückrolle
- 22: Zahnriemen
- 23: Zahnkranz
- 24: Kurbelarm
- 25: Gestell
- 26: Linearführung
- 27: Linearführung
- 28: Linearführung
- 29: Linearführung
- 30: Schlitten
- 31: Zahnriemen
- 32: Andrückrolle
- 33: Andrückrolle
- 34: Ritzel
- 35: Band
- 36: Ritzel
- 37: Welle
- 38: Antriebsritzel
- 39: Zahnriemen
- 40: Band
- 41: Andrückrolle
- 42: Andrückrolle
- 43: Zahnriemen
- 44: Zahnkranz
- 45: Winkelgetriebe
- 46: Zahnriemen
- 47: Andrückrolle
- 48: Andrückrolle
- 49: Mitnehmerrahmen
- 50: Mitnehmerrahmen
- 51: Mitnehmerrahmen
- 52: Mitnehmerrahmen
- 53: Pfeil
- 54: Pfeil
- 55: Pfeil
- 56: Querstrebe
- 57: Anschlag
- 58: Ritzel
- 59: drehbarer Anschlag

## Patentansprüche

1. Sortiermaschine für Waren oder Waren enthaltende Behältnisse, bestehend aus zwei horizontal und parallel zueinander verlaufenden, gegenläufig fördernden Längsförderbahnen (5,6), die an ihren Enden miteinander fluchten, sowie jeweils an den Enden der Längsförderbahnen angeordneten, in Längsrichtung der Längsförderbahnen hin und her verfahrbaren Querförderern (7), auf die die Waren oder Behältnisse von den Längsförderbahnen und umgekehrt übergeben werden, wobei die Waren oder Behältnisse während einer Hin- und Her- Bewegung von einer Position vor der einen Längsförderbahn auf eine Position vor der anderen Längsförderbahn bewegt werden, **dadurch gekennzeichnet, dass** die Bewegungen der Querförderer (7) in einer Ebene erfolgen und dass die Übergabe der Waren oder Behältnisse von den Längsförderbahnen (5, 6) auf die Querförderer (7) und umgekehrt und die Übergabe der Waren oder Behältnisse auf eine Puffer- oder Entnahmestation (10) mittels eines oder mehrerer Mitnehmer (8) erfolgt, die in Längsrichtung der Längsförderbahnen (5, 6) relativ zum Querförderer (7) bewegbar sind.

2. Sortiermaschine nach Anspruch 1, **dadurch gekennzeichnet, dass** die Querförderer (7) Fördereinrichtungen (35) wie Bänder, Ketten oder dergleichen aufweisen, mit denen die Waren während einer Hin- und Herbewegung der Querförderer (7) in Längsrichtung der Längsförderbahnen (5, 6) auf einer halbkreisförmigen oder bogenförmigen Bahn von einer Position vor der einen Längsförderbahn auf eine Position vor der anderen Längsförderbahn und umgekehrt bewegt werden.

3. Sortiermaschine nach Anspruch 1 oder 2, **dadurch gekennzeich-net, dass** die Fördereinrichtungen (35) der Querförderer (7), die Querförderer (7) und der oder die Mitnehmer (8) mittels eines gemeinsamen Antriebes (9) antreibbar sind.

4. Sortiermaschine nach einem der Ansprüche 1 bis 3, **dadurch ge-kennzeichnet, dass** die Fördereinrichtungen (14, 15) der Längsförderbahnen (5, 6), die Fördereinrichtungen (35) der Querförderer (7), die Querförderer (7) und der oder die Mitnehmer (8) mittels eines gemeinsamen Antriebes (9) antreibbar sind.

5. Sortiermaschine nach einem der Ansprüche 1 bis 4, **dadurch ge-kennzeichnet, dass** als gemeinsamer Antrieb ein motorisch antreibbares Kurbelgetriebe (9) vorgesehen ist.

6. Sortiermaschine nach einem der Ansprüche 1 bis 5, **dadurch ge-kennzeichnet, dass** der Mitnehmer (8) mindestens vier in Längsrichtung der Längsförderbahnen (5, 6) hintereinander angeordnete, Mitnehmerrahmen (49, 50, 51, 52) zum Mitnehmen der Waren oder Behältnisse aufweist, wobei die Querstreben (56) der Mitnehmerrahmen (49, 50, 51, 52) jeweils zwei zueinander beabstandete, in ihrer Höhenlage veränderlich angeordnete Anschläge (57) aufweisen.

7. Sortiermaschine nach einem der Ansprüche 1 bis 6, **dadurch ge-kennzeichnet, dass** mehrere gegenläufig fördernde Längsförderbahnen, Querförderer und Mitnehmer in verschiedenen Ebenen übereinander vorgesehen sind.

8. Sortiermaschine nach Anspruch 7, **dadurch gekennzeich-net, dass** die Längsförderbahnen, Querförderer und Mitnehmer in den verschiedenen Ebenen bzw. deren Fördereinrichtungen mittels eines gemeinsamen Antriebes antreibbar sind.

9. Sortiermaschine nach einem der Ansprüche 1 bis 8, **dadurch ge-kennzeichnet, dass** die Bewegung des oder der Mitnehmer (8) relativ zu der Hin- und Her- Bewegung der Querförderer (7) derart erfolgt, dass die Waren oder Behältnisse um einen doppelten Abstand ihrer Position auf den Längsförderbahnen (5, 6) in Längsrichtung der Längsförderbahnen (5, 6) verschiebbar sind.

10. Sortiermaschine nach einem der Ansprüche 1 bis 9, **dadurch ge-kennzeichnet, dass** die Puffer- oder Entnahmestation (10) Fördereinrichtungen (40) für eine Querbewegung der Waren oder Behältnisse aufweisen.

11. Sortiermaschine nach Anspruch 10, **dadurch gekennzeich-net, dass** die Fördereinrichtung (40) der Puffer- oder Entnahmestation (10) von dem gemeinsamen Antrieb (9) gemäß Anspruch 3, 4 oder 8 antreibbar ist.

## Claims

1. Sorting machine for goods or containers containing goods which machine consists of two horizontal longitudinal conveyor tracks which run parallel and convey in opposite directions (5, 6), the ends of which tracks are aligned, and back and forth movable cross conveyors (7) placed at the end of each longitudinal conveyor track in the longitudinal sense of the longitudinal conveyor tracks, on which cross conveyors the goods or containers are transferred from the longitudinal conveyor tracks and vice versa, with the goods or containers being moved by a back and forth movement from a position in front of one longitudinal conveyor track to a position in front of the other longitudinal conveyor track, which sorting machine is **characterised in that** the movements of the cross conveyors (7) take place on one level and that the transfer of the goods or containers from the longitudinal conveyor tracks (5, 6) onto the cross conveyors (7) and vice versa as well as the delivery of the goods or containers on a buffer or withdrawal station (10) are effected by means of one or more drivers (8) which are movable in the longitudinal sense of the longitudinal conveyor tracks (5, 6) relative to the cross conveyor (7).

2. Sorting machine according to claim 1 **characterised in that** the cross conveyors (7) include transport equipment (35) such as belts, chains or similar, by which the goods are moved on a semi-circular or curved track from a position in front of one longitudinal conveyor track to a position in front of the other longitudinal conveyor track and vice versa through a back and forth movement of the cross conveyors (7) in the longitudinal sense of the longitudinal conveyor tracks (5, 6).

3. Sorting machine according to claims 1 or 2 **characterised in that** the transport equipment (35) of the cross conveyors (7), the cross conveyors (7), and the driver(s) (8) may be activated by one joint driving mechanism (9).

4. Sorting machine according to one of the claims 1 to 3 **characterised in that** the transport equipment (14, 15) of the longitudinal conveyor tracks (5, 6), the transport equipment (35) of the cross conveyors (7), the cross conveyors (7), and the driver(s) (8) may be activated by one joint driving mechanism (9).

5. Sorting machine according to one of the claims 1 to 4 **characterised in that** a motor-driven crank drive is provided as joint driving mechanism (9).

6. Sorting machine according to one of the claims 1 to 5 **characterised in that** the driver (8) has at least four driver frames (49, 50, 51, 52) placed in a row in the longitudinal sense of the longitudinal conveyor tracks (5, 6) to take along the goods or containers wherein the cross members (56) of the driver frames (49, 50, 51, 52) have two stop units (57) which are situated at a distance of each other and are variable in height.

7. Sorting machine according to one of the claims 1 to 6 **characterised in that** several longitudinal conveyor tracks conveying in opposite directions, and several cross conveyors and drivers are positioned on various levels one upon the other.

8. Sorting machine according to claim 7 **characterised in that** the longitudinal conveyor tracks, cross conveyors and drivers on the various levels as well as the related transport equipment may be activated by one joint driving mechanism.

9. Sorting machine according to one of the claims 1 to 8 **characterised in that** the movement of the driver(s) (8) in relation to the back and forth movement of the cross conveyors (7) is such that the goods or containers are movable by a double distance of their positions on the longitudinal conveyor tracks (5, 6) in the longitudinal sense of the longitudinal conveyor tracks (5, 6).

10. Sorting machine according to one of the claims 1 to 9 **characterised in that** the buffer or withdrawal station (10) has transport equipment (40) designed for a cross movement of the goods or containers.

11. Sorting machine according to claim 10 **characterised in that** the transport equipment (40) of the buffer or withdrawal station (10) may be activated by the joint driving mechanism (9) according to claim 3, 4 or 8.

## Revendications

1. Machine à trier pour marchandises ou conteneurs contenant des marchandises composée de deux chemins de roulement longitudinaux horizontaux courant en parallèle et transportant dans les directions opposées (5, 6), avec les bouts alignés, et des convoyeurs transversaux (7) pouvant effectuer des mouvements va-et-vient dans le sens longitudinal des chemins de roulement longitudinaux étant disposés au bout de chacun des chemins de roulement longitudinaux et sur lesquels les marchandises ou conteneurs sont placés en arrivant des chemins de roulement longitudinaux ou vice versa, les marchandises et conteneurs étant déplacés pendant un mouvement va-et-vient d'une position devant un chemin de roulement longitudinal à une position devant l'autre chemin de roulement longitudinal, laquelle machine est **caractérisée en ce que** les mouvements des convoyeurs transversaux (7) sont effectués à un niveau et que le transport des marchandises ou conteneurs des chemins de roulement longitudinaux (5, 6) sur les convoyeurs transversaux (7) et vice versa ainsi que le transport des marchandises ou conteneurs sur une station tampon ou de prélèvement (10) sont effectués à l'aide d'un ou plusieurs entraîneur(s) (8) mobiles dans le sens longitudinal des chemins de roulement longitudinaux (5, 6) relatif au convoyeur transversal (7).

2. Machine à trier suivant la revendication 1 **caractérisée en ce que** les convoyeurs transversaux (7) sont pourvus d'équipement de transport (35) comme des bandes, chaînes ou similaire, par lequel les marchandises sont transportées sur un chemin semi-circulaire ou cintré d'une position devant un chemin de roulement longitudinal à une position devant l'autre chemin de roulement longitudinal ou vice versa pendant un mouvement va-et-vient des convoyeurs transversaux (7) dans le sens longitudinal des chemins de roulement longitudinaux (5, 6).

3. Machine à trier suivant les revendications 1 ou 2 **caractérisée en ce que** l'équipement de transport (35) des convoyeurs transversaux (7), les convoyeurs transversaux (7) et le ou les entraîneur(s) (8) peuvent être actionnés par un mécanisme d'entraînement commun (9).

4. Machine à trier suivant l'une des revendications 1 à 3 **caractérisée en ce que** l'équipement de transport (14, 15) des chemins de roulement longitudinaux (5, 6), l'équipement de transport (35) des convoyeurs transversaux (7), les convoyeurs transversaux (7), et le ou les entraîneur(s) (8) peuvent être actionnés par un mécanisme d'entraînement commun (9).

5. Machine à trier suivant l'une des revendications 1 à 4 **caractérisée en ce qu'** un entraînement par manivelle (9) motorisé est prévu en tant que mécanisme d'entrainement commun.

6. Machine à trier suivant l'une des revendications 1 à 5 **caractérisée en ce que** l'entraîneur (8) est pourvu d'au moins quatre cadres d'entraînement (49, 50, 51, 52) placés en file dans le sens longitudinal des chemins de roulement longitudinaux (5, 6) servant à emporter les marchandises ou conteneurs, avec les traverses des cadres d'entraînement étant équipées de deux butoirs (57) chacun situés à distance l'un de l'autre et étant variable en hauteur.

7. Machine à trier suivant l'une des revendications 1 à 6 **caractérisée en ce que** plusieurs chemins de roulement longitudinaux transportant dans les directions opposées, plusieurs convoyeurs transversaux et entraîneurs sont arrangés à différents niveaux les uns au dessus des autres.

8. Machine à trier suivant la revendication 7 **caractérisée en ce que** les chemins de roulement longitudinaux, les convoyeurs transversaux et les entraîneurs arrangés à différents niveaux peuvent être actionnés par un mécanisme d'entraînement commun.

9. Machine à trier suivant l'une des revendications 1 à 8 **caractérisée en ce que** le mouvement du ou des entraîneur(s) (8) relatif au mouvement va-et-vient des convoyeurs transversaux (7) s'effectue de telle sorte que les marchandises ou conteneurs sont déplaçables d'une double distance de leur position sur les chemins de roulement longitudinaux (5, 6) dans le sens longitudinal des chemins de roulement longitudinaux (5, 6).

10. Machine à trier suivant l'une des revendications 1 à 9 **caractérisée en ce que** la station tampon ou de prélèvement (10) est pourvue d'équipement de transport (40) permettant d'effectuer un mouvement transversal des marchandises ou conteneurs.

11. Machine à trier suivant la revendication 10 **caractérisée en ce que** l'équipement de transport (40) de la station tampon ou de prélèvement peut être actionné par le mécanisme d'entraînement commun suivant les revendications 3, 4 ou 8.
